# EUROPÄISCHE PATENTSCHRIFT

(11) **EP 3 205 218 B1**
(45) Veröffentlichungstag und Bekanntmachung des Hinweises auf die Patenterteilung: **30.01.2019**
(21) Anmeldenummer: 17154838.1
(22) Anmeldetag: 06.02.2017
(51) Int. Cl.: A24C 5/35, B65G 21/18, B65G 47/51

(54) **VORRICHTUNG ZUM FÖRDERN EINES MASSESTROMS STABFÖRMIGER ARTIKEL UND VERWENDUNG DERSELBEN**
DEVICE FOR CONVEYING A MASS FLOW OF ROD-LIKE ARTICLES AND USE OF THE SAME
DISPOSITIF DE TRANSPORT D'UN FLUX MASSIQUE D'ARTICLE SOUS FORME DE TIGE ET SON UTILISATION

(30) Priorität: 12.02.2016 DE 102016102474
(43) Veröffentlichungstag der Anmeldung: 16.08.2017
(73) Patentinhaber: Hauni Maschinenbau GmbH, 21033 Hamburg (DE)
(72) Erfinder: Busse-Riepshoff, Uwe, 21244 Buchholz (DE); Kreysern, Jan, 21075 Hamburg (DE); Müller, Thomas, 20259 Hamburg (DE); Krößmann, Jürgen, 21493 Schwarzenbek (DE); Blüthgen, Sönke Christian, 21465 Reinbek (DE); Schuster, Christof, 72074 Tübingen (DE); Wildgen, Ivo, 20257 Hamburg (DE); Graf, Jakob, 25486 Alveslohe (DE)
(74) Vertreter: Seemann & Partner Patentanwälte mbB

(56) Entgegenhaltungen:
- EP-A1- 0 838 165
- DE-A1- 4 224 609
- DE-A1- 19 622 251
- US-A1- 2003 111 319
- US-A1- 2009 050 445

## Beschreibung

Die Erfindung betrifft eine Vorrichtung zum Fördern von stabförmigen Artikeln der Tabak verarbeitenden Industrie entlang einer Förderstrecke mit Fördermitteln, die dazu eingerichtet sind, die stabförmigen Artikel von einer Aufgabezone entlang der Förderstrecke zu einer Abgabezone zu bewegen, und mit einer die Fördermittel entlang der Förderstrecke wenigstens abschnittsweise führenden Führungsbahn, die als eine erste und eine zweite um eine gemeinsame vertikale geometrische Achse herum angeordnete Wendel ausgebildet ist, wobei die Fördermittel so auf der Führungsbahn geführt sind, dass die stabförmigen Artikel entlang der ersten Wendel in einer ersten Transportrichtung und entlang der zweiten Wendel in einer entgegengesetzten zweiten Transportrichtung förderbar sind, und wobei ein Umlenkschlitten umfasst ist, der dazu ausgebildet ist, die stabförmigen Artikel von der ersten Wendel auf die zweite Wendel zu überführen, und wobei der Umlenkschlitten zum Verändern einer Länge der Förderstrecke zwischen der Aufgabezone und der Abgabezone an den Wendeln entlang verfahrbar ist.

In modernen Produktionsanlagen, insbesondere solchen der Tabak verarbeitenden Industrie, sind die Maschinen und Vorrichtungen, in denen die einzelnen Herstellungsschritte aufeinanderfolgend ausgeführt werden, miteinander über Förderstrecken verbunden. Beispielsweise werden in einer Zigarettenmaschine Zigaretten hergestellt und anschließend einem Verpacker zugeführt. Eine in die Förderstrecke zwischen diesen beiden Maschinen integrierte Speichereinrichtung dient dazu, Leistungsdifferenzen der miteinander verbundenen Maschinen auszugleichen und so einen möglichst kontinuierlichen und effizienten Produktionsablauf sicherzustellen. In der Tabak verarbeitenden Industrie sind solche Speichereinrichtungen vielfach als Massenstromspeicher zur Aufnahme eines Stroms stabförmiger Artikel, beispielsweise Zigaretten, ausgelegt und weisen ferner eine variable Aufnahmekapazität auf. Der von einer ersten Maschine abgegebene Massenstrom stabförmiger Artikel wird kontinuierlich abgenommenen, gleichzeitig wird die im Herstellungsprozess folgende Maschine mit einem konstanten Massenstrom versorgt. Wenn eine der beiden Maschinen, beispielsweise aufgrund von Wartungsarbeiten oder einer technische Störung, ausfällt oder eine geringere Abgabe- oder Aufnahmekapazität hat, kann eine Beeinträchtigung des Produktionsablaufs zumindest zeitweise überbrückt werden.

Im Kontext der vorliegenden Beschreibung sind stabförmige Artikel der Tabak verarbeitenden Industrie beispielsweise Zigaretten (Filter- oder Plain-Zigaretten), Filterstäbe, Zigarillos, Stumpen oder andere rauchbare Artikel aus Tabak oder Tabakersatzstoffen, wie beispielsweise rauchlose Zigaretten oder dgl.

Zur Speicherung stabförmiger Artikel werden in der Tabak verarbeitenden Industrie sog. FIFO-Speicher (FIFO = first in first out) bevorzugt, bei denen zuerst in den Speicher geförderte Artikel auch zuerst aus diesem wieder entnommen werden. Ein Vorteil der FIFO-Speicher ist, dass alle Artikel eine etwa gleich lange Verweildauer im Speicher haben.

Ein solcher Speicher ist beispielsweise aus DE 42 24 609 A1 bekannt. Der bodenständige und kompakte Speicher weist eine Förderstrecke auf, die entlang zweier Wendeln verläuft. Ein Massenstrom stabförmiger Artikel wird zwischen einer Aufgabezone, in der die stabförmigen Artikel dem Speicher zugeführt werden, und einer Abgabezone, in der die stabförmigen Artikel dem Speicher wieder entnommen werden, entlang der Förderstrecke mit variabler Länge transportiert und so gespeichert. Dabei wird der Massenstrom entlang der ersten Wendel aufwärts transportiert und mit Hilfe einer s-förmig gebogenen Umlenkbahn oder einem Schlitten von der ersten auf die zweite Wendel umgelenkt und anschließend entlang der zweiten Wendel wieder abwärts in Richtung der Abgabezone transportiert.

Zum Umlenken des Massenstroms werden die stabförmigen Artikel in beiden Fällen in Transportrichtung von der ersten Wendel aufgenommen, umgelenkt und in der zweiten Transportrichtung der zweiten Wendel zugeführt. Zur Veränderung der Kapazität des Massespeichers wird die Länge der Förderstrecke zwischen der Aufgabezone und der Abgabezone variiert. Hierzu werden die Umlenkbahn oder der Umlenkschlitten entlang der Wendel verfahren.

Aus dem Stand der Technik ist bekannt, dass der Umlenkschlitten an einer Säule befestigt ist, die sich senkrecht im Zentrum der Wendel erstreckt. Der Umlenkschlitten ist über eine senkrechte Hubstange und einen horizontalen Dreharm an der Säule gehalten. Zum Verändern der Förderstrecke zwischen der Auf- und der Abgabezone wird der Umlenkschlitten an den Wendeln entlang verfahren.

Der Nachteil dieser aus dem Stand der Technik bekannten Lösung ist, dass die Möglichkeit, den an der Säule gehaltenen Schlitten zu verfahren, sehr beschränkt ist. Sollte der Umlenkschlitten über die gesamte Länge der Wendel verfahren werden, würde dies die Abmessungen der Vorrichtung quasi verdoppeln, da eine entsprechend lange Hubstange vorgesehen werden müsste.

Es ist eine Aufgabe der Erfindung, eine Vorrichtung zum Fördern stabförmiger Artikel sowie die Verwendung einer solchen Vorrichtung anzugeben, wobei die Vorrichtung kompakt und flexibel konstruiert sein soll.

Die Aufgabe wird gelöst durch eine Vorrichtung gemäß dem Anspruch 1, d.h. eine Vorrichtung zum Fördern von stabförmigen Artikeln der Tabak verarbeitenden Industrie entlang einer Förderstrecke mit Fördermitteln, die dazu eingerichtet sind, die stabförmigen Artikel von einer Aufgabezone entlang der Förderstrecke zu einer Abgabezone zu bewegen, und mit einer die Fördermittel entlang der Förderstrecke wenigstens abschnittsweise führenden Führungsbahn, die als eine erste und eine zweite um eine gemeinsame vertikale geometrische Achse herum angeordnete Wendel ausgebildet ist, wobei die Fördermittel so auf der Führungsbahn geführt sind, dass die stabförmigen Artikel entlang der ersten Wendel in einer ersten Transportrichtung und entlang der zweiten Wendel in einer entgegengesetzten zweiten Transportrichtung förderbar sind, und wobei ein Umlenkschlitten umfasst ist, der dazu ausgebildet ist, die stabförmigen Artikel von der ersten Wendel auf die zweite Wendel zu überführen, und wobei der Umlenkschlitten weiterhin zum Verändern einer Länge der Förderstrecke zwischen der Aufgabezone und der Abgabezone an den Wendeln entlang verfahrbar ist, wobei die Vorrichtung dadurch fortgebildet ist, dass die Führungsbahn eine Schlitten-Führungs- und Haltevorrichtung umfasst, an der der Umlenkschlitten an der Führungsbahn verfahrbar gehalten ist. Die vorliegende Erfindung beruht auf der Erkenntnis, dass mit Hilfe einer Schlitten-Führungs- und Haltevorrichtung an der Führungsbahn der Schlitten entlang der gesamten Führungsbahn verfahren werden kann, ohne dass die Speichervorrichtung selbst aus diesem Grund größere Abmessungen aufweisen muss.

Die erfindungsgemäße Vorrichtung ist bevorzugt eine Speichervorrichtung, insbesondere ein Massespeicher. Die stabförmigen Artikel werden als einlagiger oder mehrlagiger Massenstrom der Vorrichtung zugeführt und in dieser gefördert. Es handelt sich also bevorzugt um eine Vorrichtung zum Fördern eines Massenstroms stabförmiger Artikel. Außerdem erfolgt der Produktdurchlauf nach dem FIFO-Prinzip. Dies bedeutet, dass zuerst in die Vorrichtung einlaufende stabförmige Artikel auch zuerst aus dieser wieder herausgefördert werden. Die Vorrichtung ist ferner bevorzugt bodenständig.

Die Förderung der stabförmigen Artikel erfolgt entlang der wendelförmigen Förderstrecke, so dass die Vorrichtung kompakt ist, also wenig Platz in Anspruch nimmt. Die geförderten bzw. gespeicherten stabförmigen Artikel sind außerdem für das Bedienpersonal jederzeit sichtbar und zugänglich. Beim Transport eventuell auftretende Probleme können mit geringem Aufwand behoben werden. Die Sichtbarkeit des geförderten Massenstroms wird insbesondere dadurch gewährleistet, dass die Wendel bevorzugt entlang der geometrischen Achse gegeneinander versetzt angeordnet sind. Insbesondere ist vorgesehen, dass die Wendel um eine halbe Windung bzw. eine halbe Wendel gegeneinander versetzt sind. Die geometrische Achse ist eine gedachte Achse, die nicht baulich verwirklicht ist. Die beschriebene Geometrie verhindert, dass der auf einer Wendel transportierte Massenstrom den auf der anderen Wendel transportierten Massenstrom verdeckt. Ferner ist insbesondere vorgesehen, dass die beiden Wendel mit gleicher Steigung ausgebildet sind. Sie verlaufen also entlang des Umfangs der Vorrichtung bevorzugt parallel zueinander. Insbesondere ist außerdem vorgesehen, dass der Umlenkschlitten außen an der Führungsbahn angeordnet ist, sich also mit anderen Worten außerhalb des von den Wendeln umschlossenen Raums befindet.

Die erfindungsgemäße Vorrichtung ermöglicht vorteilhaft eine sehr produktschonende Förderung bzw. Speicherung der stabförmigen Artikel. Dies ist unter anderem der Fall, da der Massenstrom stabförmiger Artikel nur eine einzige Umlenkung erfährt, nämlich im Umlenkschlitten. Während des gesamten Transports in der Vorrichtung ist abgesehen von der Umlenkung keine Änderung des Radius der Förderstrecke vorhanden. Insbesondere durchläuft der Massenstrom keine abwechselnd geraden und gekrümmten Transportstrecken. Die stabförmigen Artikel werden nur sehr geringfügig bis gar nicht mechanisch belastet.

Bei herkömmlichen Massespeichern, in denen die Transportstrecke mehrfach ihre Krümmungsrichtung und ihren Radius ändert, werden die stabförmigen Artikel im Bereich ihrer Enden vielfach gestaucht, zumindest aber mechanisch belastet. Da bei der erfindungsgemäßen Vorrichtung, abgesehen von der Umlenkung, keine Änderung des Radius der Förderstrecke vorhanden ist, wird die Belastung der stabförmigen Artikel im Bereich ihrer Enden sehr gering gehalten.

Ferner ist die Vorrichtung konstruktiv einfach aufgebaut. Der Umlenkschlitten ist über die Schlitten-Führungs- und Haltevorrichtung direkt an der Führungsbahn aufgenommen und wird von dieser gehalten.

Als Schlitten-Führungs- und Haltevorrichtung umfasst die Führungsbahn beispielsweise eine oder mehrere Schienen oder Vorsprünge, Sicken, Nuten oder auch andere geeignete Maßnahmen, welche es erlauben, den Führungsschlitten verfahrbar an der Führungsbahn aufzunehmen. Die Führungsbahn dient also nicht nur dazu, die Fördermittel des Massenstroms zu führen, sie dient gleichzeitig als Haltevorrichtung für den Umlenkschlitten. Vorteilhaft kann daher auf konstruktive Maßnahmen zum Halten des Umlenkschlittens verzichtet werden. Mit anderen Worten entfällt vorteilhaft die Notwendigkeit für eine Tragstruktur, mit welcher der Schlitten gehalten wird und die ihn entlang der Führungsbahn bzw. der Förderstrecke verfährt. Dies vereinfacht die Konstruktion der gesamten Vorrichtung.

Außerdem ist die mechanische Toleranzkette bei der vorgesehenen Aufnahme des Umlenkschlittens direkt an der Führungsbahn besonders kurz. Es liegen mit anderen Worten nur sehr wenige Funktionselemente zwischen den Elementen, die eine Förderung der stabförmigen Artikel bewirken, also den Fördermitteln, und den Elementen des Umlenkschlittens, welche die Umlenkung des Massenstroms bewirken. So kann mit überschaubarem konstruktivem Aufwand eine sehr präzise Führung und Umlenkung des Massenstroms realisiert werden.

Die erfindungsgemäße Vorrichtung ist aufgrund ihrer Konstruktion außerdem leicht skalierbar. Dies bedeutet, dass ohne nennenswerte konstruktive Anpassungen die Vorrichtung in unterschiedlicher Größe und maximaler Speicherkapazität realisiert werden kann. Bei herkömmlichen Speichern, welche eine Tragstruktur zur Aufnahme des Umlenkschlittens verwenden, ist die maximale Größe durch diese Tragstruktur begrenzt. Sie muss bei einer nachträglichen Um- oder Aufrüstung angepasst werden oder von vornherein überdimensioniert werden. Beide Maßnahmen sind mit Aufwand und Kosten verbunden. Bei der erfindungsgemäßen Vorrichtung ist der Umlenkschlitten direkt an der Führungsbahn aufgenommen. Unabhängig von der realisierten oder gewünschten Länge der Führungsbahn bleibt die Halterung des Umlenkschlittens stets gleich. Dies ist insbesondere im Hinblick auf ggf. vorgesehene spätere Erweiterungen der Vorrichtung oder Umbaumaßnahmen, mit denen die Speicherkapazität vergrößert oder verkleinert wird, vorteilhaft. Die erfindungsgemäße Vorrichtung ist also sehr flexibel.

Gemäß einer vorteilhaften Ausführungsform ist die Vorrichtung dadurch fortgebildet, dass der Umlenkschlitten eine tragende Struktur umfasst, welche mit der Schlitten-Führungs- und Haltevorrichtung der Führungsbahn zusammenwirkt und welche weiterhin dazu ausgebildet ist, den Umlenkschlitten an der Führungsbahn verfahrbar zu halten.

Die den Umlenkschlitten tragende Struktur umfasst beispielsweise Streben, Stege oder Halterungen, die an einem Ende in oder an die Schlittenführungs- und Haltevorrichtung ein- oder angreifen und am anderen Ende den Umlenkschlitten halten, insbesondere an diesem befestigt sind. Da diese tragende Struktur gemeinsam mit dem Umlenkschlitten verfahren wird, ist sie unabhängig von der realisierten Kapazität der Vorrichtung. Die Flexibilität der Vorrichtung wird also in keiner Weise eingeschränkt.

Gemäß einer weiteren vorteilhaften Ausführungsform ist die Vorrichtung dadurch fortgebildet, dass der Umlenkschlitten eine Umlenkeinheit umfasst, die dazu eingerichtet ist, die stabförmigen Artikel von der ersten Wendel auf die zweite Wendel umzulenken und dabei eine Umkehrung einer Transportrichtung der stabförmigen Artikel um zumindest näherungsweise 180° zu bewirken.

Mit anderen Worten erfolgt eine Umlenkung des Messestroms von der ersten Transportrichtung in die entgegengesetzte zweite Transportrichtung. Hierzu umfasst die Umlenkeinheit beispielsweise ein Umlenkblech oder mehrere Umlenk- bzw. Leitbleche. Ebenso ist beispielsweise vorgesehen, dass die Umlenkeinheit einen Fallschacht umfasst, durch welchen die stabförmigen Artikel geleitet werden. Die Umlenkeinheit ist also insbesondere dazu eingerichtet, eine Transportrichtung des Massenstroms zuerst nach unten und anschließend entgegen der ersten Transportrichtung, nämlich in Richtung der zweiten Transportrichtung, umzulenken.

Die Form der Förderstrecke, welche entlang der Wendel verläuft, definiert an ihrem Außenradius zumindest näherungsweise eine Zylindermantelfläche. Die Umlenkung des Massenstroms stabförmiger Artikel erfolgt wahlweise in der (gekrümmten) Ebene der Zylindermantelfläche oder außerhalb des Zylinders. Die Umlenkung in der Zylindermantelfläche, also in vertikaler Richtung zwischen den Wendeln, erlaubt eine maximal schonende Produkthandhabung. Es findet lediglich eine Umlenkung und keine Änderung des Radius der Förderstrecke statt. Wird der Massenstrom außerhalb des vom Außenradius der Förderstrecke begrenzten Volumens, also auf der Außenseite der Wendel, umgelenkt, werden die stabförmigen Artikel seitlich von den Fördermitteln abgeschoben. Dieser Vorgang kann ebenfalls sehr produktschonend vorgenommen werden. Außerdem vereinfacht die Anordnung des Umlenkschlittens an der Außenseite der Wendel dessen Konstruktion und verbessert die Zugänglichkeit. Transportmittel und Umlenkschlitten sind im letzten Fall funktionell vollständig getrennt. Dies bietet Vorteile in der Konstruktion und in der Wartung.

Gemäß einer weiteren vorteilhaften Ausführungsform ist die Vorrichtung dadurch fortgebildet, dass der Umlenkschlitten eine erste und eine zweite Leitvorrichtung umfasst, wobei die erste Leitvorrichtung dazu eingerichtet ist, die stabförmigen Artikel quer zur ersten Transportrichtung seitlich von der ersten Wendel abzuschieben, und wobei die zweite Leitvorrichtung dazu eingerichtet ist, einen umgelenkten Massenstrom quer zur zweiten Transportrichtung seitlich in die zweite Wendel einzuschieben.

Mit anderen Worten verlassen die stabförmigen Artikel die Wendel tangential. Bei diesem Vorgang verlassen die stabförmigen Artikel die Führungsbahnen seitlich. Dieses Abschieben bzw. Einschieben der stabförmigen Artikel von und in die Wendel erfolgt quer zur ersten bzw. zweiten Transportrichtung.

Bei der Leitvorrichtung handelt es sich beispielsweise um Leitbleche, welche insbesondere zumindest näherungsweise senkrecht zu einer Oberfläche der Führungsbahn orientiert sind. Mit anderen Worten wird gemäß dieser Ausführungsform eine Umlenkung des Massenstroms außerhalb des von den Wendeln umschlossenen Raums vorgenommen. Die Konstruktion der Vorrichtung gemäß diesem Ausführungsbeispiel ist konstruktiv besonders einfach, da Transport und Umlenkung der stabförmigen Artikel funktionell und konstruktiv voneinander getrennt sind.

Ferner ist insbesondere vorgesehen, dass die erste Leitvorrichtung ein Abschiebeband und die zweite Leitvorrichtung ein Aufschiebeband umfasst, deren Flachseiten jeweils zumindest näherungsweise senkrecht zur Führungsbahn orientiert sind. Das Abschiebeband weist insbesondere eine Transportgeschwindigkeit auf, die zumindest näherungsweise einer Geschwindigkeit der in der ersten Transportrichtung in den Umlenkschlitten einlaufenden stabförmigen Artikel entspricht. Das Aufschiebeband weist insbesondere eine Transportgeschwindigkeit auf, die zumindest näherungsweise einer Geschwindigkeit der in der zweiten Transportrichtung aus dem Umlenkschlitten auslaufenden stabförmigen Artikel entspricht.

Das Aufschieben und Abschieben der stabförmigen Artikel erfolgt mit Hilfe des Aufschiebe- bzw. Abschiebebands in besonders produktschonender Art und Weise. Durch die Anpassung der Transportgeschwindigkeit des Aufschiebe- und Abschiebebands an die Geschwindigkeit des Massenstroms, werden die Enden der stabförmigen Artikel beim Auf- und Abschieben nur sehr gering belastet. Um möglichst wenig Reibung zwischen den stabförmigen Artikeln zu erzeugen, ist eine Oberfläche dieser Bänder insbesondere zumindest näherungsweise senkrecht zu einer Oberfläche der Führungsbahn orientiert.

Die Speicherkapazität der Vorrichtung wird verändert, indem der Umlenkschlitten, wie bereits erwähnt, entlang der Wendel bzw. entlang der Führungsbahn verfahren wird. Hierzu ist gemäß einer weiteren Ausführungsform vorgesehen, dass der Umlenkschlitten einen eigenen Antrieb umfasst, mit dem der Umlenkschlitten an der Führungsbahn verfahrbar ist. Dabei ist der Antrieb insbesondere dazu ausgebildet, zum Verfahren des Umlenkschlittens eine Antriebskraft zu erzeugen, die zwischen der Führungsbahn und dem Umlenkschlitten wirkt.

Mit anderen Worten ist also der Umlenkschlitten nicht nur ausschließlich an der Führungsbahn aufgenommen bzw. durch die Führungsbahn gehalten, auch ein Verfahren des Umlenkschlittens erfolgt in direkter Wechselwirkung mit der Führungsbahn. Es wird insbesondere auf weitere konstruktive Maßnahmen, wie beispielsweise eine zusätzliche Halterung oder einen zusätzlichen Antrieb, verzichtet. Dies vereinfacht die

Konstruktion der Vorrichtung und macht sie außerdem sehr flexibel.

Ferner wird durch die Integration des Antriebs in dem Umlenkschlitten eine sehr kurze Toleranzkette für den Antrieb des Umlenkschlittens realisiert. Dies verringert nicht nur den maschinenbaulichen Aufwand und die damit verbundenen Kosten, sondern erlaubt außerdem eine präzise und vibrationsarme Positionierung des Umlenkschlittens.

Um den Umlenkschlitten gegenüber der Führungsbahn sicher und präzise verfahren zu können, ist gemäß einer weiteren Ausführungsform vorgesehen, dass an der Führungsbahn ein gegenüber der Führungsbahn statisches Eingriffselement vorhanden ist, in das ein Antriebselement des Antriebs des Umlenkschlittens zum Erzeugen einer zwischen der Führungsbahn und dem Umlenkschlitten wirkenden Kraft formschlüssig eingreift.

Das Eingriffselement ist insbesondere an einem äußeren Rand der Führungsbahn vorgesehen. Beispielsweise handelt es sich bei dem Eingriffselement um eine Kette. Anstatt einer Kette ist ebenso vorgesehen, als statisches Eingriffselement beispielsweise Zahnstangen, Zahnriemen oder dgl. vorzusehen. Der Vorteil einer Kette oder eines Zahnriemens besteht insbesondere darin, dass diese flexibel und einfach nach der Montage der Führungsbahn auf die Länge der Führungsbahn angepasst und an der Vorrichtung angebracht werden können.

Beispielsweise ist gemäß einem Ausführungsbeispiel das Eingriffselement eine Kette und das Antriebselement ein Zahnrad. Ferner ist beispielhaft vorgesehen, dass das Zahnrad permanent zumindest entlang eines Viertels, insbesondere entlang zumindest einer Hälfte und ferner insbesondere entlang eines Dreiviertels seines Umfangs, mit der Kette in Eingriff steht. Der Antrieb umfasst ferner insbesondere zwei Spannritzel, mit denen die Kette um das Zahnrad geführt ist. Gleiches gilt für einen mit dem Zahnrad zusammenwirkenden Zahnriemen. Mit anderen Worten ist die Kette oder der Zahnriemen um die beiden Spannritzel und um das Zahnrad so herumgeführt, dass die Kette bzw. der Zahnriemen die Form des griechischen Buchstabens Omega beschreibt.

Vorteilhaft steht das als Antriebsrad wirkende Zahnrad stets mit mehreren Zähnen mit dem statischen Eingriffselement in Eingriff. Dies verringert den an dem Zahnrad sowie an dem statischen Eingriffselement auftretenden Verschleiß und erlaubt außerdem ein präzises Verfahren des Umlenkschlittens entlang der Führungsbahn. Im Ergebnis wird eine zuverlässige Übertragung auch hoher Antriebskräfte bei gleichzeitig sehr guter Lebensdauer erreicht.

Gemäß einem weiteren Ausführungsbeispiel ist der Antrieb des Umlenkschlittens dadurch realisiert, dass das Antriebselement eine Antriebskette ist. Insbesondere steht diese zumindest abschnittsweise, insbesondere auf zumindest einem Viertel ihrer Länge, mit dem Eingriffselement in Eingriff.

Auch bei diesem Antrieb befindet sich stets eine große Anzahl von Elementen, beispielsweise Zähnen, gleichzeitig in formschlüssigem Eingriff. Hierzu ist die Antriebskette beispielsweise mit entsprechenden Zähnen versehen, welche in das statische Eingriffselement, beispielsweise eine weitere Kette, eingreifen.

Im Betrieb der Vorrichtung können auf dem Umlenkschlitten, aufgrund der Dynamik der Antriebsregelung, hohe Massekräfte wirken. Dies ist beispielsweise der Fall, wenn Geschwindigkeits- oder Produktionsschwankungen der der Vorrichtung vor- und nachgeschalteten Maschinen durch Veränderung der Länge der Förderstrecke, also durch Verfahren des Schlittens, ausgeglichen werden müssen. Bevorzugt wird daher eine formschlüssige Kraftübertragung eingesetzt, denn es hat sich herausgestellt, dass zum Verfahren des Schlittens eine Übertragung der erforderlichen Antriebskräfte durch reibschlüssige Kraftübertragung wenig geeignet ist. So können die hohen dynamischen Kräfte dazu führen, dass zwischen den Reibpartnern Schlupf entsteht. Eine Veränderung der Oberflächenzustände durch Glättung, Schmutzeintrag oder Verschleiß erschwert zusätzlich eine eindeutige Positionierung und Positionserfassung des Umlenkschlittens durch die Maschinensteuerung. Bei der gemäß Aspekten der Erfindung vorgesehenen formschlüssigen Übertragung der Antriebskräfte, welche beispielsweise über eine entsprechende Verzahnung erfolgt, treten diese technischen Probleme nicht auf. Da außerdem jeweils eine Vielzahl von Verzahnungselementen in gegenseitigem Eingriff steht, kann der auftretende Verschleiß sehr gering gehalten werden, was eine hohe Lebensdauer des Antriebs ermöglicht.

Gemäß einer weiteren Ausführungsform ist die Vorrichtung dadurch fortgebildet, dass die Führungsbahn aus einzelnen Modulen aufgebaut ist, welche sich insbesondere zumindest näherungsweise entlang einer halben Windung oder eines halben Wendels erstrecken. Dies betrifft vorteilhaft alle Ausführungsformen.

Ein modularer Aufbau der Führungsbahn erlaubt einerseits einen hohen Grad der Vorfertigung der Vorrichtung und andererseits geringe Transportkosten, da gleichzeitig ein hoher Grad an Zerlegbarkeit erreicht wird. Die Module werden einzeln vorgefertigt und am Einsatzort der Vorrichtung mit geringem Aufwand zusammengesetzt bzw. montiert. Vorteilhaft muss die Vorrichtung nicht als Ganzes oder in großen Teilen transportiert werden. Die Module sind mit wesentlich geringeren Transportkosten zum Bestimmungsort transportierbar, als dies die montierte oder teilmontierte Vorrichtung wäre. Außerdem ist die Vorrichtung praktisch beliebig skalierbar und kann beispielsweise im Hinblick auf ihre Speicherkapazität auch zu einem späteren Zeitpunkt flexibel an Kundenwünsche angepasst werden, ohne dass eine aufwendige Neukonstruktion notwendig ist.

Die Vorrichtung ist ferner bevorzugt dadurch fortgebildet, dass die erste und die zweite Wendel den gleichen Radius haben. Dies betrifft alle Ausführungsformen. Mit anderen Worten sind die erste Wendel und die zweite Wendel, da diese entlang der geometrischen Achse versetzt sind, übereinander angeordnet. Folglich ist sowohl der von der ersten Wendel transportierte Massenstrom als auch der von der zweiten Wendel transportierte Massenstrom für das Bedienpersonal jederzeit sichtbar und zugänglich. Etwaig auftretende Probleme können sofort und ohne großen Aufwand behoben werden.

Die Aufgabe wird ferner gelöst durch die Verwendung einer Vorrichtung gemäß einem oder mehreren der zuvor genannten Aspekte als variabler Massespeicher für stabförmige Artikel in einer Anlage der Tabak verarbeitenden Industrie. Auf die Verwendung der Vorrichtung treffen gleiche oder ähnliche Vorteile zu, wie sie bereits im Hinblick auf die Vorrichtung selbst erwähnt wurden.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine Vorrichtung zum Fördern eines Massenstroms in schematisch vereinfachter Perspektivansicht,
- Fig. 2, 3: einen Umlenkschlitten in schematisch vereinfachter Perspektivansicht,
- Fig. 4, 5: schematisch vereinfachte Darstellungen eines Antriebs des Umlenkschlittens,
- Fig. 6: ein Detail eines Transportmoduls mit angesetztem Umlenkschlitten in schematisch vereinfachter Perspektivansicht,
- Fig. 7: ein Detail des Transportmoduls mit angesetztem Umlenkschlitten in einer weiteren schematisch vereinfachten Perspektivansicht,
- Fig. 8: ein Transportmodul in schematisch vereinfachter Perspektivansicht,
- Fig. 9: ein Schleppmodul in schematisch vereinfachter Perspektivansicht,
- Fig. 10: eine Konzeptdarstellung des modularen Aufbaus der Vorrichtung zum Fördern eines Massenstroms,
- Fig. 11: eine beispielsweise als Antriebsmittel dienende Rollenkette in schematisch vereinfachter Perspektivansicht,
- Fig. 12 - 14: ein beispielsweise als Fördermittel vorgesehenes Gliederband mit angesetzter Rollenkette in verschiedenen vereinfachten perspektivischen Ansichten,
- Fig. 15 - 17: einzelne Glieder dieses Gliederbandes in verschiedenen schematisch vereinfachten perspektivischen Ansichten und
- Fig. 18, 19: weitere Vorrichtungen zum Fördern eines Massenstroms stabförmiger Artikel jeweils in schematisch vereinfachter Perspektivansicht.

In den Zeichnungen sind jeweils gleiche oder gleichartige Elemente und/oder Teile mit denselben Bezugsziffern versehen, sodass von einer erneuten Vorstellung jeweils abgesehen wird.

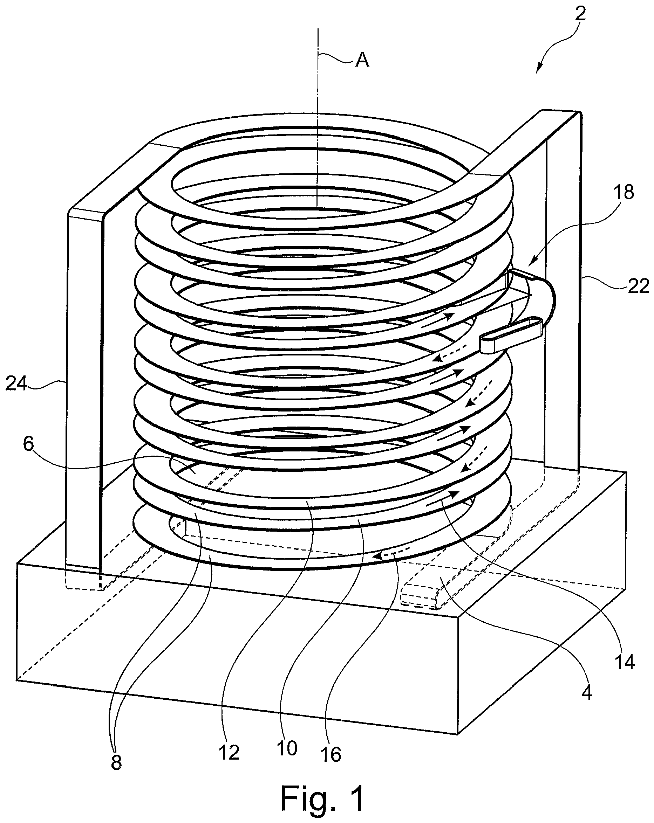

Fig. 1 zeigt eine Vorrichtung 2 zum Fördern von stabförmigen Artikeln der Tabak verarbeitenden Industrie, insbesondere eines Massenstroms stabförmiger Artikel. Die Vorrichtung 2 ist ein variabler Massespeicher, um Produktionsschwankungen oder Unterschiede in den Produktionsgeschwindigkeiten bzw. der Ausstoß- oder Verarbeitungsmenge von einzelnen hintereinander geschalteten Maschinen auszugleichen. Beispielsweise wird die Vorrichtung 2 zwischen eine Zigarettenmaschine, welche einen Massenstrom von Zigaretten als stabförmige Artikel ausstößt, und einen Verpacker geschaltet. Als stabförmige Artikel der Tabak verarbeitenden Industrie sind neben Zigaretten (Filter- oder Plain-Zigaretten) auch Filterstäbe, Zigarillos, Stumpen oder sonstige Artikel der Tabak verarbeitenden Industrie vorgesehen. Der geförderte Massenstrom besteht aus einem einlagigen, typischerweise einem mehrlagigen Strom von übereinanderliegenden oder gestapelten und queraxial geförderten stabförmigen Artikeln, beispielsweise Zigaretten. Die Vorrichtung 2 dient als Speicher, der nach dem sog. FIFO-Prinzip arbeitet, d.h. zuerst in den Speicher geförderte Artikel werden auch als erstes diesem wieder entnommen.

Die stabförmigen Artikel werden in der Vorrichtung 2 von einer Aufgabezone 4 entlang einer Förderstrecke zu einer Abgabezone 6 bewegt. Insbesondere liegen die Aufgabezone 4 und die Abgabezone 6 auf der gleichen Höhe und sind an die Abgabe- bzw. Aufnahmehöhe der vor- und nachgelagerten Maschine angepasst. Die Vorrichtung 2 ist bodenständig aufgebaut.

Zum Transport des Massenstroms sind in Fig. 1 nicht dargestellte Fördermittel, beispielsweise ein Gliederband, vorhanden. Die Fördermittel werden abschnittsweise auf einer Führungsbahn 8 geführt. Die Führungsbahn 8 ist als eine erste Wendel 10 und als eine zweite Wendel 12 mit bevorzugt gleicher Steigung ausgebildet. Die beiden Wendel 10, 12 sind um eine gemeinsame vertikale geometrische Achse A (dargestellt in strich-punktierter Linie) herum angeordnet. Die geometrische Achse A ist nicht baulich realisiert und dient lediglich der Erläuterung der Konstruktion und der Lage der beiden Wendel 10, 12. Die beiden Wendel 10, 12 sind außerdem um eine halbe Windung gegeneinander versetzt. Ferner sind die Wendel 10, 12 gegeneinander entlang der geometrischen Achse A verschoben bzw. versetzt. Entsprechend liegt die Aufgabezone 4, von der ausgehend der Massenstrom der stabförmigen Artikel der ersten Wendel 10 zugeführt wird, in der perspektivischen Darstellung von Fig. 1 vorne, während die Abgabezone 6, der der Massenstrom ausgehend von der zweiten Wendel 12 entnommen wird, in einem in Fig. 1 hinten liegenden Bereich dargestellt ist.

Die stabförmigen Artikel werden ausgehend von der Aufgabezone 4 entlang der ersten Wendel 10 in einer ersten Transportrichtung 14 aufwärts transportiert. Die erste Transportrichtung 14 ist auf der ersten Wendel 10 mit durchgezogenen Pfeilen angedeutet, wobei lediglich ein Pfeil aus Gründen der Übersichtlichkeit mit Bezugszeichen versehen ist. Der Massenstrom erreicht einen Umlenkschlitten 18 und wird von der ersten Wendel 10 auf die zweite Wendel 12 umgelenkt. Er wird anschließend in einer zweiten Transportrichtung 16, die mit gestrichelten Pfeilen dargestellt ist, wobei aus Gründen der Übersichtlichkeit wiederum lediglich ein Pfeil mit Bezugszeichen versehen ist, abwärts transportiert. So erreicht der Massenstrom ausgehend von der zweiten Wendel 12 die Abgabezone 6. Die erste und die zweite Transportrichtung 14, 16 sind einander entgegengesetzt. Entsprechend werden die Fördermittel auf der durch die erste und die zweite Wendel 10, 12 definierten Führungsbahn 8 in entgegengesetzten Richtungen bewegt. Bei den Fördermitteln handelt es sich beispielsweise um ein endloses Gliederband, welches über den senkrechten ersten bzw. zweiten Abschnitt 22, 24 vom jeweils oberen Ende der ersten bzw. der zweiten Wendel 10, 12 zurück zur jeweiligen Aufgabezone 4, 6 geführt ist.

Die erste und die zweite Wendel 10, 12 haben in dem in Fig. 1 dargestellten Ausführungsbeispiel einen identischen Radius. Sie sind aufgrund ihres Versatzes entlang der geometrischen Achse A übereinander angeordnet. So ist der auf der Führungsbahn 8 geförderte Massenstrom sowohl in seiner Aufwärtsbewegung entlang der ersten Wendel 10 als auch in seiner Abwärtsbewegung entlang der zweiten Wendel 12 stets sichtbar. Der Massenstrom ist für das Bedienpersonal gut zugänglich, etwaig auftretende Störungen des Transports können sofort und mit geringem Aufwand behoben werden. Dem kommt auch zugute, dass die Vorrichtung 2 bodenständig ist, was die Zugänglichkeit ebenfalls verbessert.

Um Veränderungen in der Verarbeitungsgeschwindigkeit bzw. Ausstoßgeschwindigkeit der vor und hinter der Vorrichtung 2 vorhandenen Maschinen in einer Anlage der Tabak verarbeitenden Industrie auszugleichen, wird die Speicherkapazität der Vorrichtung 2 dynamisch verändert. Hierzu ist vorgesehen, dass der Umlenkschlitten 18, der an der Führungsbahn 8 gehalten ist, entlang der Führungsbahn 8 verfahren wird. Zum Vergrößern der Speicherkapazität wird der Umlenkschlitten 18 aufwärts entlang der Führungsbahn 8 verfahren. Hierdurch wird die Länge der Förderstrecke zwischen der Aufgabezone 4 und der Abgabezone 6 vergrößert. Zum Verringern der Speicherkapazität wird der Umlenkschlitten 18 abwärts entlang der Führungsbahn 8 verfahren, so dass sich die Förderstrecke zwischen der Aufgabezone 4 und der Abgabezone 6 verkürzt. Zum Verfahren des Umlenkschlittens 18 entlang der Führungsbahn 8 umfasst dieser einen in Fig. 1 nicht dargestellten Antrieb, der von einem Motor angetrieben wird.

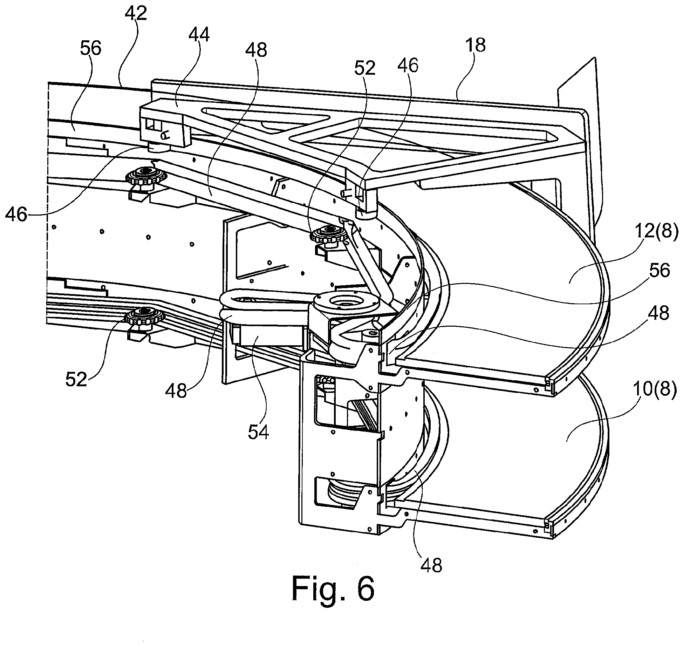

Der Umlenkschlitten 18 ist an der Führungsbahn 8 verfahrbar gehalten und bringt auch die zur Veränderung seiner Position notwendigen Antriebskräfte gegenüber der Führungsbahn 8 auf. Es ist keine zusätzliche konstruktive Führung oder Halterung des Umlenkschlittens 18 vorgesehen. Um den Umlenkschlitten 18 an der Führungsbahn 8 aufzunehmen, umfasst diese eine Schlitten-Führungs- und Haltevorrichtung, welche im Zusammenhang mit Fig. 6 näher erläutert werden soll.

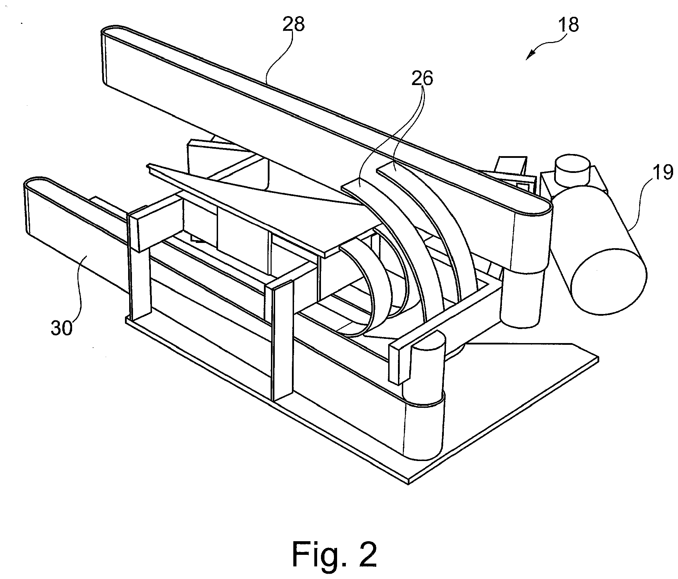

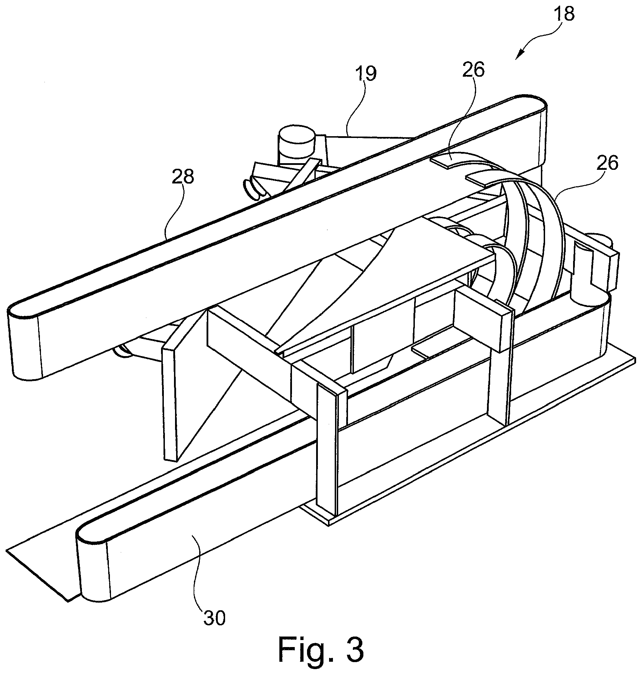

Zunächst zeigt Fig. 2 in einer schematisch vereinfachten Perspektivansicht den Umlenkschlitten 18. Fig. 3 zeigt den Umlenkschlitten 18 in einer weiteren vereinfachten perspektivischen Darstellung aus einem anderen Blickwinkel.

Der Umlenkschlitten 18 umfasst eine Umlenkeinheit 26, im dargestellten Ausführungsbeispiel zwei gebogene Umlenkbleche. Diese sind dazu eingerichtet, den Massenstrom von der ersten Wendel 10 auf die zweite Wendel 12 umzulenken und dabei eine Umkehrung der Transportrichtung des Massenstroms zu bewirken. Es erfolgt eine Umlenkung um zumindest näherungsweise 180°.

Der Umlenkschlitten 18, wie er beispielsweise in der in Fig. 1 dargestellten Vorrichtung 2 eingesetzt wird, ist außerdem mit einer ersten Leitvorrichtung 28 und mit einer zweiten Leitvorrichtung 30 versehen. Die Umlenkung des Massenstroms erfolgt außerhalb der Wendel 10, 12, (vgl. Fig. 1), also in einem Bereich, der nicht von den Wendeln 10, 12 umschlossen ist. Hierzu ist vorgesehen, dass der Massenstrom seitlich von der ersten Wendel 10 abgeschoben, umgelenkt und anschließend seitlich in die zweite Wendel 12 wieder eingeschoben wird. Die erste Leitvorrichtung 28 ist dazu eingerichtet, den Massenstrom quer zur ersten Transportrichtung 14 seitlich von der ersten Wendel 10 abzuschieben. Die zweite Leitvorrichtung 30 ist dazu eingerichtet, den von der Umlenkeinheit 26 umgelenkten Massenstrom quer zur zweiten Transportrichtung 16 seitlich in die zweite Wendel 12 wieder einzuschieben. Als erste und zweite Leitvorrichtung 28, 30 sind jeweils Förderbänder vorgesehen. Die Flachseiten der Förderbänder sind zumindest näherungsweise senkrecht zu einer von der Führungsbahn 8 definierten Fläche orientiert.

Im dargestellten Ausführungsbeispiel ist ferner vorgesehen, dass das als erste Leitvorrichtung 28 vorgesehene Abschiebeband eine Transportgeschwindigkeit aufweist, die zumindest näherungsweise einer Geschwindigkeit des in der ersten Transportrichtung 14 in dem Umlenkschlitten 18 einlaufenden Massenstroms entspricht. Die stabförmigen Artikel des Massenstroms werden an ihren Kopfenden, ohne dass eine Relativbewegung gegenüber dem Abschiebeband stattfindet, während des Abschiebevorgangs von dem Fördermittel heruntergeschoben. Das Abschieben der stabförmigen Artikel mit derart angepasster Geschwindigkeit ist ein besonders produktschonender Vorgang. Bei der zweiten Leitvorrichtung 30 handelt es sich um ein Abschiebeband, dessen Transportgeschwindigkeit zumindest näherungsweise auf eine Geschwindigkeit des Massenstroms beim Verlassen des Umlenkschlittens 18 angepasst ist. Ähnlich wie beim Abschieben sorgt auch hier die fehlende Relativbewegung für eine optimale Produktschonung. Das Abschiebeband und das Aufschiebeband als erste und zweite Leitvorrichtung 28, 30 sind mit entsprechenden steuerbaren Antrieben, welche nicht dargestellt sind, ausgestattet.

Zum Verfahren des Umlenkschlittens 18 entlang der Führungsbahn 8 umfasst dieser einen Antrieb, welcher in ein statisches Eingriffselement, welches an einem äußeren Rand der Führungsbahn 8 vorhanden ist, formschlüssig eingreift. Als statisches Eingriffselement ist beispielsweise eine Kette, eine Zahnstange oder ein Zahnriemen vorgesehen. Als Antriebselement dieses Antriebs ist insbesondere ein Zahnrad 32 vorgesehen, welches von dem Motor 19 angetrieben wird. Es findet vorteilhaft eine Kraftübertragung über formschlüssig ineinandergreifende Elemente statt, sodass anders als bei einer reibschlüssigen Kraftübertragung kein Schlupf auftritt.

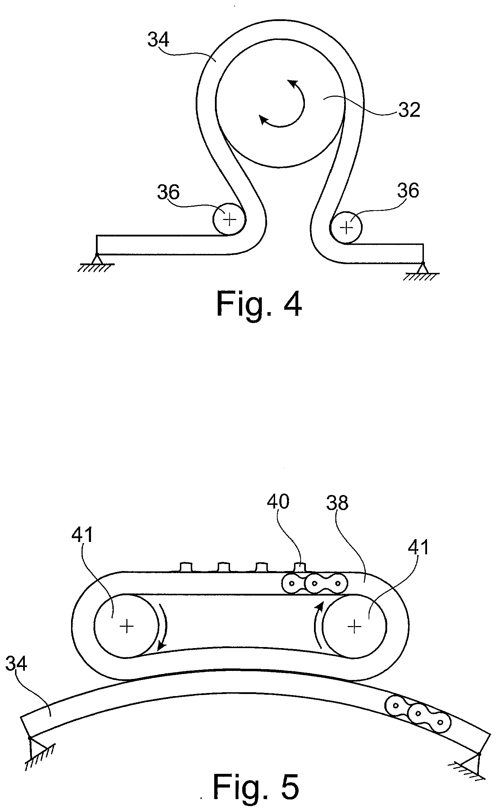

Fig. 4 zeigt in schematisch vereinfachter Darstellung eine Funktionsskizze eines Antriebs des Umlenkschlittens 18. Eine als statisches Eingriffselement dienende Kette 34 ist um das als Antriebselement dienende Zahnrad 32 herumgeführt. Die Kette 34 beschreibt im gespannten Zustand eine Bahn, welche ähnlich wie der griechische Buchstabe Omega aussieht. Hierzu sind Spannritzel 36 umfasst, welche dafür sorgen, dass die Kette 34 zumindest entlang eines Viertels, insbesondere entlang zumindest einer Hälfte und wie im dargestellten Ausführungsbeispiel in etwa entlang eines Dreiviertels, des Umfangs des Zahnrads 32 mit der Kette 34 in Eingriff steht. So ist sichergestellt, dass stets eine Vielzahl von Zähnen des Zahnrads 32 in die Kette 34 eingreift. Der Umlenkschlitten 18 ist präzise positionierbar sowie schlupffrei, vibrations- und verschleißarm entlang der Führungsbahn 8 verfahrbar.

Alternativ ist der Umlenkschlitten 18 mit einem Antrieb versehen, wie er schematisch und vereinfacht in Fig. 5 dargestellt ist. Als Antriebselement ist eine Antriebskette 38 vorgesehen, welche entlang zumindest eines Viertels ihrer Länge mit dem statischen Eingriffselement, beispielsweise mit der Kette 34, in Eingriff steht. Die Antriebskette 38 umfasst Zähne 40, welche in die Kette 34 eingreifen. Die Antriebskette 38 ist auf Ritzeln 41 geführt, von denen beispielsweise eines als Antriebsritzel ausgestaltet ist. Dieses ist, ähnlich wie bei dem Ausführungsbeispiel in Fig. 4 das Zahnrad 32, mit dem Motor 19 gekoppelt und dadurch angetrieben.

Das statische Eingriffselement, also beispielsweise die Kette 34, ist an ihren Enden befestigt und beispielsweise entlang eines äußeren Umfangs entlang der Führungsbahn 8 geführt bzw. gespannt.

Die Vorrichtung 2 ist bevorzugt so ausgestaltet, dass die Führungsbahn 8 aus einzelnen Modulen aufgebaut ist. Die Module erstrecken sich dabei insbesondere zumindest näherungsweise entlang einer halben Windung der Wendel 10, 12. Mit anderen Worten ist sowohl die erste Wendel 10 als auch die zweite Wendel 12, welche gemeinsam die Führungsbahn 8 bilden, jeweils aus einzelnen Modulen aufgebaut, die sich jeweils bevorzugt entlang eines halben Kreisbogens erstrecken und einen Teil einer Schraube beschreiben. Hierbei sind Transportmodule 42 und Schleppmodule 58 als einzelne Module vorgesehen, welche später im Detail erläutert werden sollen.

Fig. 6 zeigt in einer schematisch vereinfachten Perspektivansicht ein Detail eines Transportmoduls 42, welches je einen Abschnitt der Führungsbahn 8 bereitstellt, der Teil der ersten Wendel 10 bzw. der zweiten Wendel 12 ist.

Der Umlenkschlitten 18 ist an der Führungsbahn 8 verfahrbar gehalten. Hierzu hintergreift eine tragende Struktur 44 des Umlenkschlittens 18, welche mit Halterollen 46 versehen ist, die Schlitten-Führungs- und Haltevorrichtung 56 der Führungsbahn 8. Als Schlitten-Führungs- und Haltevorrichtung 56 umfasst die Führungsbahn 8 die in Fig. 6 dargestellte senkrecht stehende Leiste. Ferner sind als Schlitten-Führungs- und Haltevorrichtung 56 beispielsweise eine oder mehrere Schienen oder Vorsprünge, Sicken, Nuten oder auch andere geeignete Maßnahmen, welche es erlauben, den Umlenkschlitten 18 verfahrbar an der Führungsbahn 8 aufzunehmen, vorgesehen. Auch an der in Fig. 6 unten dargestellten unteren Führungsbahn 8 sind entsprechende Maßnahmen vorgesehen, sodass ein Abkippen des Umlenkschlittens 18 vermieden wird. Die Halterollen 46 rollen beispielsweise in einer dafür vorgesehenen Nut oder hinter einem entsprechenden Vorsprung an der Führungsbahn des Transportmoduls 42 ab.

Die den Umlenkschlitten 18 tragende Struktur 44 umfasst beispielsweise Streben, Stege oder Halterungen, die an einem Ende, im dargestellten Ausführungsbeispiel über die Halterollen 46, in oder an die Schlittenführungs- und Haltevorrichtung 56 ein- oder angreifen. Am gegenüberliegenden Ende ist die tragende Struktur 44 mit dem Umlenkschlitten verbunden bzw. befestigt. Die tragende Struktur 44 verfährt gemeinsam mit dem Umlenkschlitten 18 entlang der Führungsbahn 8.

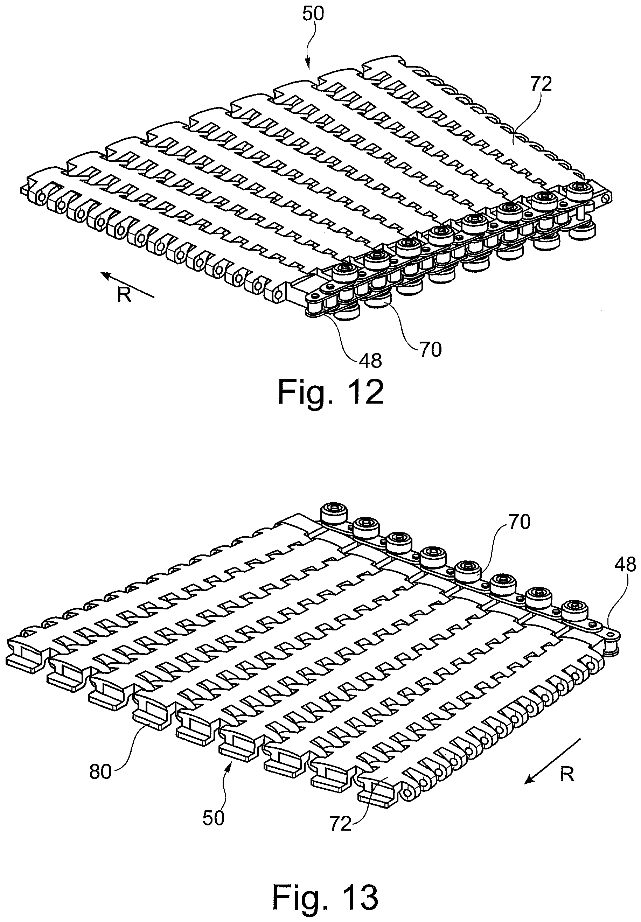

Seitlich der Führungsbahn 8 ist eine Rollenkette 48 vorhanden, welche als Antriebsmittel für die in Fig. 6 nicht dargestellten Fördermittel dient. Bei den Fördermitteln handelt es sich beispielsweise um ein seitlich angetriebenes oder antreibbares Gliederband 50 wie es die Fig. 12 bis 14 zeigen. Ebenso wie die Rollenkette 48 wird das Gliederband 50 im Zusammenhang mit diesen Figuren näher beschrieben.

Die Rollenkette 48 ist auf der innenliegenden Seite des Transportmoduls 42 zurückgeführt und wird über entsprechende Führungszahnräder 52 geführt, von denen aus Gründen der Übersichtlichkeit lediglich einige mit Bezugszeichen versehen sind. Die Rollenkette 48, die in Fig. 6 lediglich schematisch dargestellt ist, wird von einem Antriebsmotor 54 angetrieben. Hierzu ist sie um ein entsprechendes, mit dem Antriebsmotor 54 gekoppeltes und nicht näher dargestelltes Antriebsritzel herumgeführt.

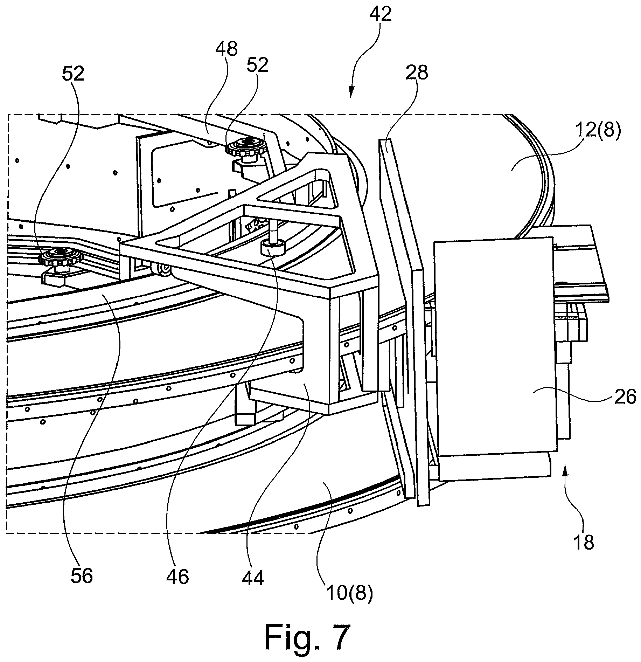

Fig. 7 zeigt einen Abschnitt des Transportmoduls 42 in einer weiteren vereinfachten perspektivischen Darstellung aus einem anderen Blickwinkel. Der Umlenkschlitten 18 ist gemäß diesem Ausführungsbeispiel mit einer ersten und einer zweiten Leitvorrichtung 28, 30 (von denen lediglich die erste Leitvorrichtung 28 sichtbar ist) in Form von Ableitblechen ausgestattet. Ferner ist sichtbar, dass der Umlenkschlitten 18 mit weiteren Halterollen 46 versehen ist, welche auf der Außenseite an der Schlittenführungs- und Haltevorrichtung 56 abrollen.

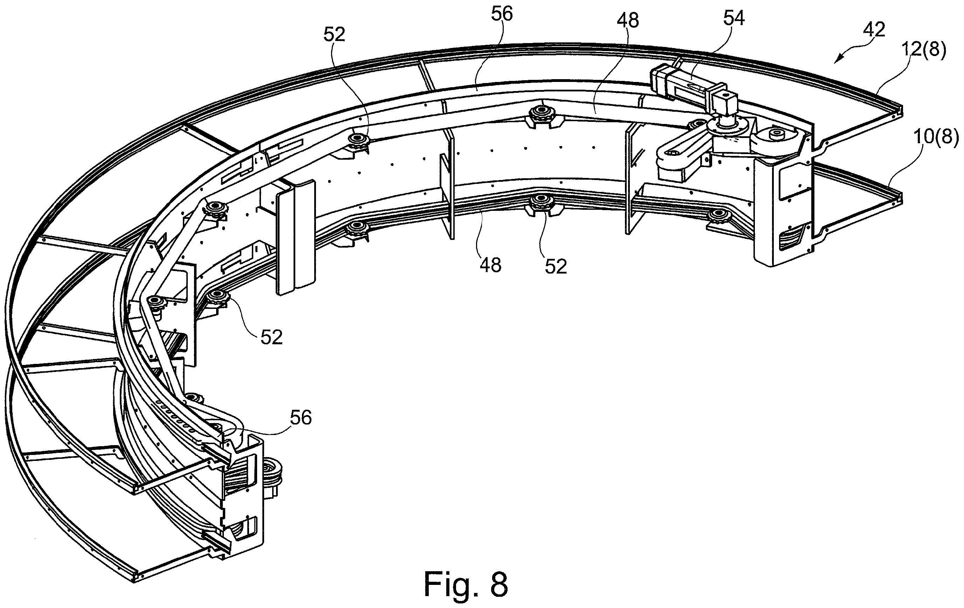

Fig. 8 zeigt in einer weiteren vereinfachten schematischen Perspektivansicht das Transportmodul 42 als Ganzes. Das Transportmodul 42, genauer der Abschnitt der die Führungsbahn 8 bildenden ersten bzw. zweiten Wendel 10, 12, hat die Form eines Spiral- oder Schraubensegments. Es beschreibt also einen halben Kreissegmentbogen, der gleichzeitig eine konstante Steigung aufweist, wie dies bei einer Schraubenwendel der Fall ist.

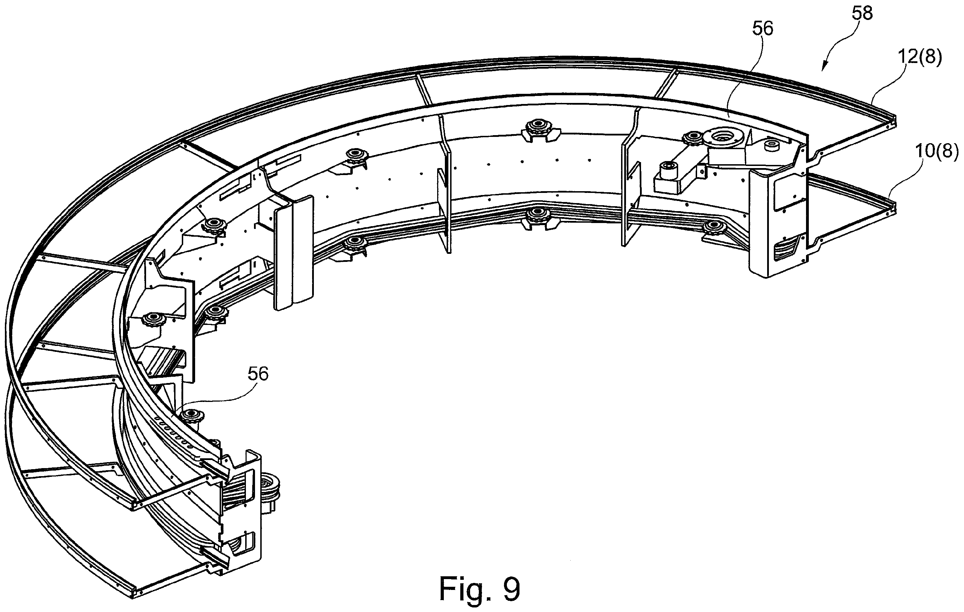

Die modular aufgebaute Vorrichtung 2 umfasst neben zumindest einem Transportmodul 42 außerdem zumindest ein Schleppmodul 58. Dieses ist in der schematisch vereinfachten Perspektivansicht von Fig. 9 dargestellt. Das Schleppmodul 58 umfasst keine Antriebsmittel, sondern eine seitlich der Führungsbahn 8 angeordnete Schleppvorrichtung. Bei dieser handelt es sich um eine in Fig. 9 nicht dargestellte frei laufende Rollenkette. Die Schleppvorrichtung dient der Aufnahme von radial nach innen (also in Richtung der geometrischen Achse A) wirkenden Kräften, die von den Fördermitteln, also beispielsweise dem Gliederband 50, auf die Schleppvorrichtung ausgeübt werden. Diese Kräfte wirken in der in den Fig. 12 bis 14 gezeigten Radialrichtung R.

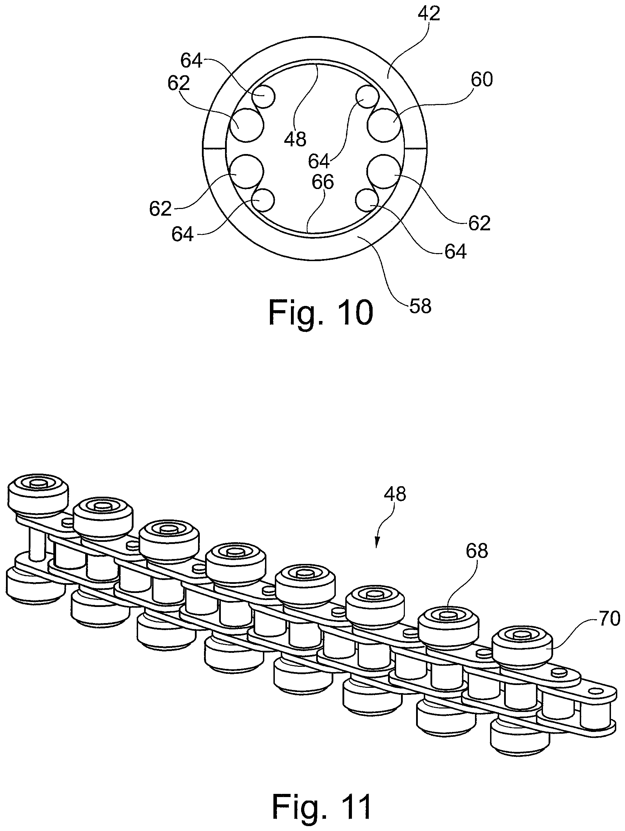

Die Vorrichtung 2 kann so aufgebaut sein, dass sie abwechselnd ein Transportmodul 42 und ein Schleppmodul 58 umfasst. Dies bedeutet, dass das Fördermittel, beispielsweise ein Gliederband, abwechselnd ein Transportmodul 42 und ein Schleppmodul 58 durchläuft. Dies illustriert die schematische Konzeptdarstellung in Fig. 10. Dabei umfasst das Transportmodul 42 die als Antriebsmittel wirkende Rollenkette 48, welche zumindest an einem ihrer Enden über ein entsprechendes Antriebsritzel 60 angetrieben ist. Am gegenüberliegenden Ende des Transportmoduls 42 wird sie von einem Umlenkritzel 62 umgelenkt. Außerdem sind Spannritzel 64 vorgesehen, um die Rollenkette 48 auf der gewünschten Spannung zu halten. Das Schleppmodul 58 umfasst eine frei laufende Rollenkette 66 als Schleppvorrichtung. Diese ist über Umlenkritzel 62 zu beiden Enden des Schleppmoduls 58 geführt und mit entsprechenden Spannritzeln 64 auf die gewünschte Spannung gespannt.

Fig. 11 zeigt in einer schematisch vereinfachten Perspektivansicht eine beispielsweise als Antriebsmittel dienende Rollenkette 48. Einzelne Bolzen 68, welche die Kettenglieder verbinden, sind länger als die übrigen Bolzen ausgeführt. Sie tragen Rollen 70 an ihren freien Enden, die beispielsweise aus einem Kunststoffmaterial hergestellt sind.

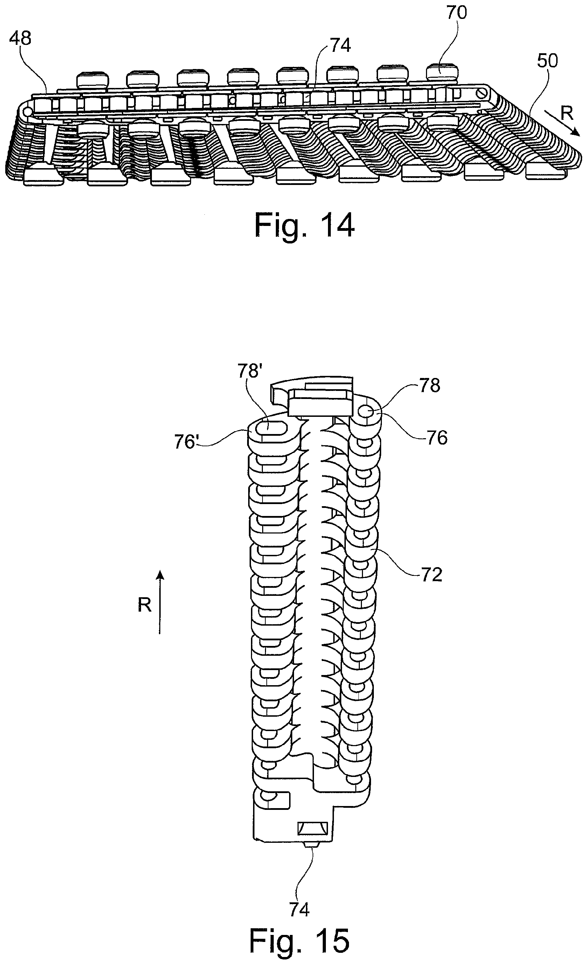

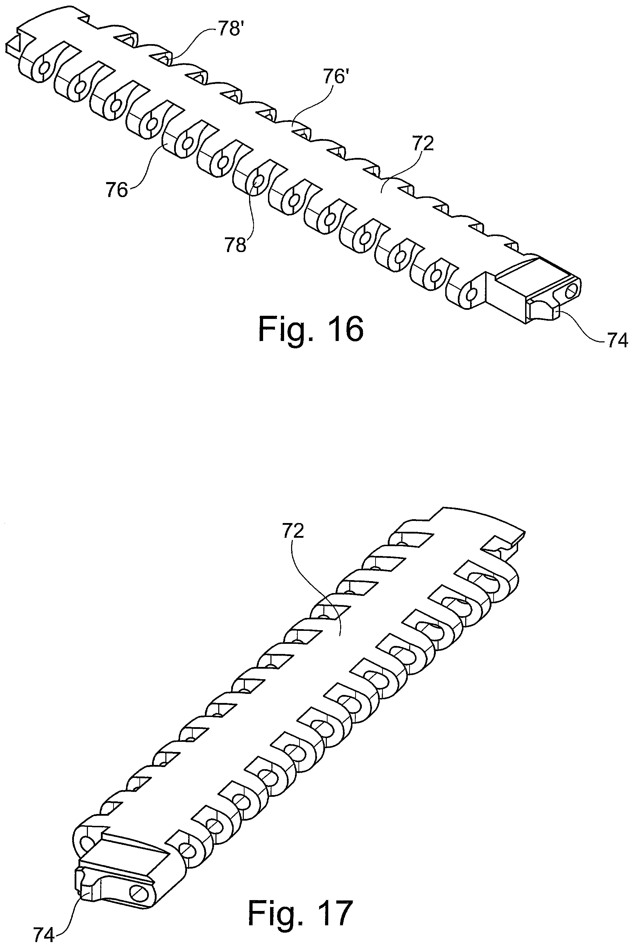

Die Fig. 12 bis 14 zeigen ein als Fördermittel beispielhaft vorgesehenes Gliederband 50 in verschiedenen vereinfachten perspektivischen Ansichten. Die einzelnen Glieder 72 des Gliederbandes 50 greifen individuell in die Rollenkette 48 ein, sodass die Glieder 72 einzeln angetrieben werden. Hierzu sind endseitig an den Gliedern 72 Zähne 74 vorgesehen (vgl. Fig. 16, 17) die in die Rollenkette 48 eingreifen. Dies zeigt auch Fig. 14.

Die Glieder 72 des Gliederbandes 50 sind in einer durch die Führungsbahn 8 festgelegten Fläche gegeneinander verdrehbar. Die Fig. 15 bis 17 zeigen einzelne Glieder 72 des Gliederbandes 50. Die Glieder 72 werden untereinander durch nicht dargestellte Bolzen verbunden. Diese werden durch die zu beiden Seiten in den Armen 76 vorhandenen Öffnungen 78 geführt. Um eine Drehbewegung der einzelnen Glieder 72 des Gliederbandes 50 gegeneinander zu ermöglichen, sind die Öffnungen 78 in den Armen 76 auf einer Seite, in den Fig. 15 bis 17 sind dies die mit 76' bezeichneten Arme, als Langlöcher 78' ausgeführt. Dabei nimmt die Breite der Langlöcher 78' in Radialrichtung R zu. Die Radialrichtung R weist, wenn das Gliederband 50 auf die Führungsbahn 8 aufgelegt ist, nach außen. Sie weist mit anderen Worten von der geometrischen Achse A weg. Die Größe der Langlöcher 78' ist so bemessen, dass die einzelnen Glieder 72 des Gliederbandes 50 derart aneinander gekoppelt sind, dass ein Drehpunkt einer einem einzelnen Glied 72 möglichen Drehbewegung außerhalb des Gliederbands 50 liegt.

Während das Gliederband 50 auf seiner radial innenliegenden Seite in die Rollenkette 48 eingreift, wird es auf seiner radial außenliegenden Seite durch Vorsprünge 80 (vgl. Fig. 13), die beispielsweise in einer entsprechenden Nut geführt sind, auf der Führungsbahn 8 gehalten.

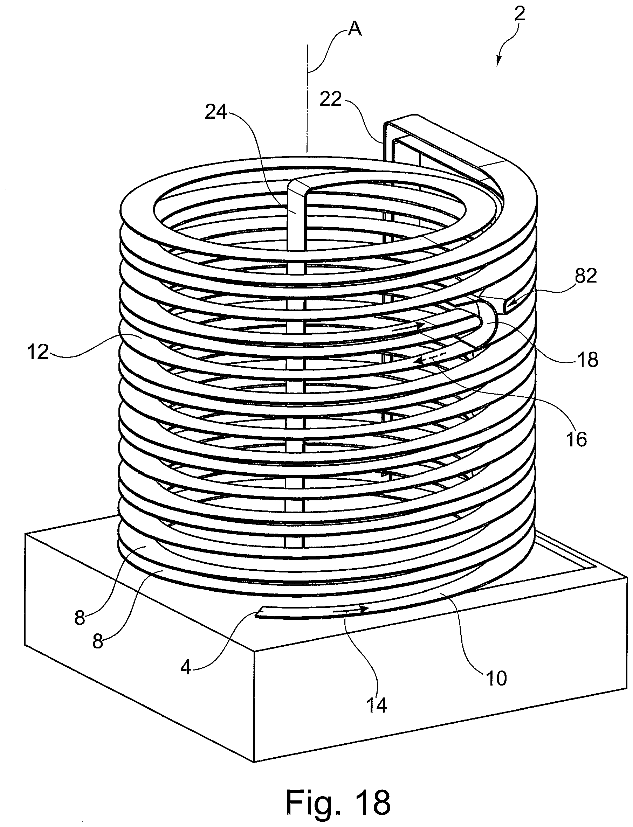

Fig. 18 zeigt in einer schematisch vereinfachten Perspektivansicht eine weitere Vorrichtung 2 zum Fördern stabförmiger Artikel, insbesondere eines Massenstroms stabförmiger Artikel der Tabak verarbeitenden Industrie. Erneut wird der Massenstrom von einer Aufgabezone 4 (in Fig. 18 auf der Vorderseite der Vorrichtung 2) zu einer Abgabezone 6 transportiert, die in der Darstellung von Fig. 18 auf der Rückseite der Vorrichtung 2 liegt und daher nicht sichtbar ist. Der Massenstrom wird ausgehend von der Aufgabezone 4 entlang der ersten Wendel 10 in der ersten Transportrichtung 14 aufwärts transportiert. Er erreicht den Umlenkschlitten 18 und wird dort auf die zweite Wendel 12 umgelenkt.

Auf dieser wird er in der zweiten Transportrichtung 16 abwärts transportiert. Erneut sind die erste Transportrichtung 14 mit durchgezogenen Pfeilen und die zweite Transportrichtung 16 mit gestrichelten Pfeilen dargestellt.

Abweichend von dem in Fig. 1 gezeigten Ausführungsbeispiel ist der Umlenkschlitten 18 bei dem in Fig. 18 gezeigten Ausführungsbeispiel nicht außerhalb der Wendel 10, 12 angeordnet. Der Umlenkschlitten 18 befindet sich im Gegenteil innerhalb einer von der Außenkante der Wendel 10, 12 beschriebenen Zylindermantelfläche. Es ist bei einer solchen Konstruktion nicht notwendig, die stabförmigen Artikel seitlich von den Wendeln 10, 12 abzuschieben, was besonders produktschonend ist.

Die Umlenkung der entlang der ersten Wendel 10 verlaufenden Fördermittel, also beispielsweise eines Gliederbands 50, erfolgt ebenfalls innerhalb der Wendel 10, 12, auf der Rückseite des Umlenkschlittens 18. An diesem Wendepunkt 82 ist beispielsweise eine entsprechende Umlenkrolle vorgesehen. Diese wird gemeinsam mit dem Umlenkschlitten 18 entlang der Führungsbahn 8 verfahren, sodass die Länge der Transportstrecke zwischen der Aufgabezone 4 und der Abgabezone 6 und somit die Kapazität der Vorrichtung 2 veränderbar ist. Die Länge des Transportmittels bleibt dabei konstant, sodass wiederum ein als endloses Band ausgestaltetes Transportmittel, beispielsweise ein Gliederband 50, verwendet wird. Auch entlang der zweiten Wendel 12 verläuft ein entsprechendes Transportmittel, beispielsweise ein Gliederband 50. Beide Transportmittel werden über die senkrecht verlaufenden Abschnitte 22 bzw. 24 zurückgeführt. Anders als bei dem Ausführungsbeispiel in Fig. 1 verläuft hierbei der zweite senkrechte Abschnitt 24, über den das auf der zweiten Wendel 12 laufende Transportmittel zurückgeführt wird, nicht außerhalb der Wendel 10, 12, sondern zentral, nahe der geometrischen Achse A.

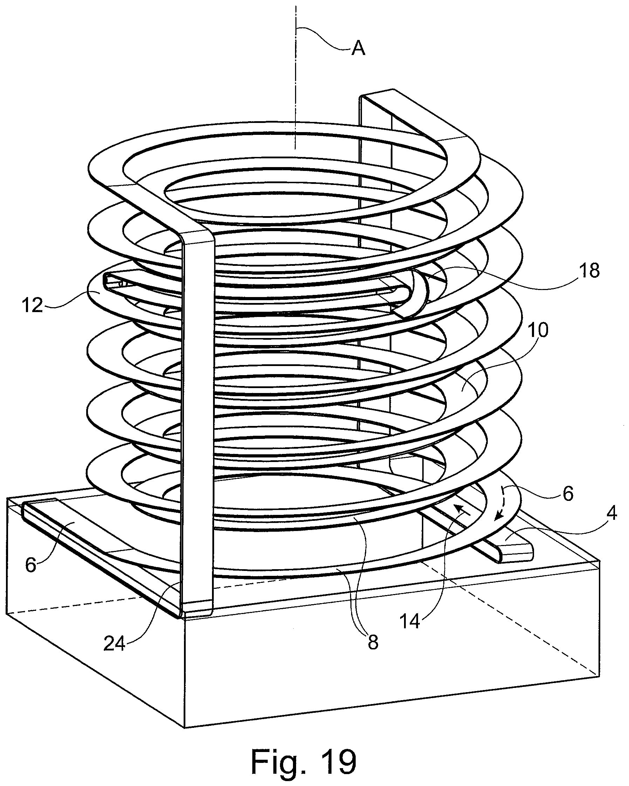

Bei den in den Fig. 1 und 18 gezeigten Vorrichtungen 2 sind die erste und die zweite Wendel 10, 12 nicht nur konzentrisch zur geometrischen Achse A angeordnet, um eine halbe Windung gegeneinander versetzt und entlang der geometrischen Achse A gegeneinander verschoben, die beiden Wendel 10, 12 weisen auch identische Radien, d.h. einen identischen Abstand zur geometrischen Achse A, auf. Bei dem in Fig. 19 gezeigten Ausführungsbeispiel weisen hingegen die erste und die zweite Wendel 10, 12 unterschiedliche Radien auf.

Auch bei dem Ausführungsbeispiel der Fig. 19 werden die stabförmigen Artikel, insbesondere der Massenstrom stabförmiger Artikel, ausgehend von einer Aufgabezone 4 entlang der ersten Wendel 10, welche im dargestellten Ausführungsbeispiel den geringeren Radius aufweist und somit innen liegt, aufwärts bis zum Umlenkschlitten 18 transportiert. Dort wird der Massenstrom auf die zweite Wendel 12 umgelenkt und gelangt abwärts zur Abgabezone 6. Die Umlenkung des Massenstroms erfolgt erneut innerhalb einer Zylindermantelfläche, welche von der zweiten Wendel 12 definiert wird. Die beiden Wendel 10, 12 sind ebenso wie im Ausführungsbeispiel, welches in Fig. 1 gezeigt ist, in Richtung der geometrischen Achse A gegeneinander verschoben und um eine halbe Windung bzw. einen halben Umlauf gegeneinander versetzt. Als Fördermittel sind erneut endlose Bänder, beispielsweise Gliederbänder 50, vorgesehen, welche in der ersten bzw. der zweiten Transportrichtung 14, 16 entlang der ersten bzw. zweiten Wendel 10, 12 angetrieben werden. Diese werden über die senkrechten Abschnitte 22, 24 zurückgeführt.

Bei den Vorrichtungen 2, wie sie die Fig. 1, 18 und 19 zeigen, ist stets sowohl der auf der ersten Wendel 10 transportierte Massenstrom als auch der auf der zweiten Wendel 12 transportierte Massenstrom für das Bedienpersonal sichtbar, sodass etwaig auftretende Probleme schnell und einfach behoben werden können.

Die zuvor beschriebenen Vorrichtungen 2 gemäß den verschiedenen Ausführungsbeispielen werden bevorzugt als variable Massespeicher für stabförmige Artikel in einer Anlage der Tabak verarbeitenden Industrie verwendet. Beispielsweise werden die Vorrichtungen 2 als variable Massespeicher für Zigaretten zwischen einer Zigarettenmaschine und einer Verpackungsmaschine eingesetzt. Die Speicherkapazität der Vorrichtung 2 wird durch Verfahren des Umlenkschlittens 18 dynamisch an die Ausstoßkapazität bzw. Abgabekapazität der miteinander gekoppelten Maschinen angepasst.

### Bezuqszeichenliste

- 2: Vorrichtung
- 4: Aufgabezone
- 6: Abgabezone
- 8: Führungsbahn
- 10: erste Wendel
- 12: zweite Wendel
- 14: erste Transportrichtung
- 16: zweite Transportrichtung
- 18: Umlenkschlitten
- 19: Motor
- 22: erster senkrechter Abschnitt
- 24: zweiter senkrechter Abschnitt
- 26: Umlenkeinheit
- 28: erste Leitvorrichtung
- 30: zweite Leitvorrichtung
- 32: Zahnrad
- 34: Kette
- 36: Spannritzel
- 38: Antriebskette
- 40: Zähne
- 41: Ritzel
- 42: Transportmodul
- 44: tragende Struktur
- 46: Halterollen
- 48: Rollenkette
- 50: Gliederband
- 52: Führungszahnräder
- 54: Antriebsmotor
- 56: Schlitten-Führungs- und Haltevorrichtung
- 58: Schleppmodul
- 60: Antriebsritzel
- 62: Umlenkritzel
- 64: Spannritzel
- 66: frei laufende Rollenkette
- 68: Bolzen
- 70: Rollen
- 72: Glieder
- 74: Zähne
- 76, 76': Arme
- 78: Öffnungen
- 78': Langlöcher
- 80: Vorsprünge
- 82: Wendepunkt

- A: geometrische Achse
- R: radiale Richtung

## Patentansprüche

1. Vorrichtung (2) zum Fördern von stabförmigen Artikeln der Tabak verarbeitenden Industrie entlang einer Förderstrecke mit Fördermitteln, die dazu eingerichtet sind, die stabförmigen Artikel von einer Aufgabezone (4) entlang der Förderstrecke zu einer Abgabezone (6) zu bewegen,
und mit einer die Fördermittel entlang der Förderstrecke wenigstens abschnittsweise führenden Führungsbahn (8), die als eine erste und eine zweite um eine gemeinsame vertikale geometrische Achse (A) herum angeordnete Wendel (10, 12) ausgebildet ist, wobei die Fördermittel so auf der Führungsbahn (8) geführt sind, dass die stabförmigen Artikel entlang der ersten Wendel (10) in einer ersten Transportrichtung (14) und entlang der zweiten Wendel (12) in einer entgegengesetzten zweiten Transportrichtung (16) förderbar sind, und
wobei ein Umlenkschlitten (18) umfasst ist, der dazu ausgebildet ist, die stabförmigen Artikel von der ersten Wendel (10) auf die zweite Wendel (12) zu überführen, und
wobei der Umlenkschlitten (18) weiterhin zum Verändern einer Länge der Förderstrecke zwischen der Aufgabezone (4) und der Abgabezone (6) an den Wendeln (10, 12) entlang verfahrbar ist, **dadurch gekennzeichnet, dass**
die Führungsbahn (8) eine Schlitten-Führungs- und Haltevorrichtung (56) umfasst, an der der Umlenkschlitten (18) an der Führungsbahn (8) verfahrbar gehalten ist.

2. Vorrichtung (2) nach Anspruch 1, **dadurch gekennzeichnet, dass** der Umlenkschlitten (18) eine tragende Struktur umfasst, welche mit der Schlitten-Führungs- und Haltevorrichtung (56) der Führungsbahn (8) zusammenwirkt und welche weiterhin dazu ausgebildet ist, den Umlenkschlitten (18) an der Führungsbahn (8) verfahrbar zu halten.

3. Vorrichtung (2) nach Anspruch 1 oder 2, **dadurch gekennzeichnet, dass** der Umlenkschlitten (18) eine erste und eine zweite Leitvorrichtung (28, 30) umfasst, wobei die erste Leitvorrichtung (28) dazu eingerichtet ist, die stabförmigen Artikel quer zur ersten Transportrichtung (14) seitlich von der ersten Wendel (10) abzuschieben, und wobei die zweite Leitvorrichtung (30) dazu eingerichtet ist, einen umgelenkten Massenstrom quer zur zweiten Transportrichtung (16) seitlich in die zweite Wendel (12) einzuschieben.

4. Vorrichtung (2) nach einem der Ansprüche 1 bis 3, **dadurch gekennzeichnet, dass** der Umlenkschlitten (18) einen eigenen Antrieb umfasst, mit dem der Umlenkschlitten (18) an der Führungsbahn (8) verfahrbar ist.

5. Vorrichtung (2) nach Anspruch 4, **dadurch gekennzeichnet, dass** an der Führungsbahn (8) ein gegenüber der Führungsbahn (8) statisches Eingriffselement vorhanden ist, in das ein Antriebselement des Antriebs des Umlenkschlittens (18) zum Erzeugen einer zwischen der Führungsbahn (8) und dem Umlenkschlitten (18) wirkenden Kraft formschlüssig eingreift.

6. Vorrichtung (2) nach einem der Ansprüche 1 bis 5, **dadurch gekennzeichnet, dass** die Führungsbahn (8) aus einzelnen Modulen aufgebaut ist, welche sich insbesondere zumindest näherungsweise entlang einer halben Windung der Wendel (10, 12) erstrecken.

7. Verwendung einer Vorrichtung (2) nach einem der Ansprüche 1 bis 6 als variabler Massespeicher für stabförmige Artikel in einer Anlage der Tabak verarbeitenden Industrie.

## Claims

1. A device (2) for conveying rod-like articles of the tobacco processing industry along a conveying line:
- with conveying means that are configured to move the rod-like articles from a feed-in zone (4) along the conveying line to a discharge zone (6),
- and with a guide track (8) that at least sectionally guides the conveying means along the conveying line that is designed as a first and a second coil (10, 12) arranged around a common vertical geometric axis (A), wherein the conveying means are guided on the guide track (8) such that the rod-like articles are conveyable along the first coil (10) in a first transportation direction (14) and along the second coil (12) in an opposite, second transportation direction (16), and
- wherein a diverter slide (18) is comprised that is designed to transfer the rod-like articles from the first coil (10) to the second coil (12), and
- wherein the diverter slide (18) is furthermore movable along the coils (10, 12) to change a length of the conveying line between the feed-in zone (4) and the discharge zone (6), **characterized in that**
- the guide track (8) comprises a slide guiding and holding device (56) on which the diverter slide (18) is held in a movable manner on the guide track (8).

2. The device (2) according to claim 1, **characterized in that** the diverter slide (18) comprises a load-bearing structure that interacts with the slide guiding and holding device (56) of the guide track (8) and that furthermore is designed to hold the diverter slide (18) on the guide track (8) in a movable manner.

3. The device (2) according to claims 1 and 2, **characterized in that** the diverter slide (18) comprises a first and a second routing device (20, 30), wherein the first routing device (28) is configured to push the rod-like articles transverse to the first transportation direction (14) laterally off the first coil (10), and wherein the second routing device (30) is configured to push a diverted mass flow transverse to the second transportation direction (16) laterally into the second coil (12).

4. The device (2) according to one of claims 1 to 3, **characterized in that** the diverter slide (18) comprises its own drive by means of which the diverter slide (18) can be moved on the guide track (8).

5. The device (2) according to claim 4, **characterized in that** an engaging element that is static relative to the guide track (8) is present on the guide track (8), and in which a drive element of the drive of the diverter slide (18) engages in a keyed fit to generate a force acting between the guide track (8) and the diverter slide (18).

6. The device (2) according to one of claims 1 to 5, **characterized in that** the guide track (8) is constructed of individual modules that extend in particular at least approximately along one-half winding of the coil (10, 12).

7. The use of a device (2) according to one of claims 1 to 6 as a variable mass storage system for rod-like articles in a plant of the tobacco processing industry.

## Revendications

1. Dispositif (2) de transport d'articles en forme de tiges de l'industrie de transformation du tabac le long d'une section de transport, comprenant
des moyens de transport qui sont agencés pour déplacer les articles en forme de tiges le long de la section de transport, depuis une zone de réception (4) vers une zone de délivrance (6), et
une voie de guidage (8) guidant, au moins en partie, les moyens de transport le long de la section de transport, qui est réalisée sous la forme d'une première et d'une seconde spirale (10, 12) disposées autour d'un axe géométrique vertical (A) commun, les moyens de transport étant guidés sur la voie de guidage (8) de façon telle que les articles en forme de tiges peuvent être transportés le long de la première spirale (10) dans une première direction de transport (14) et le long de la seconde spirale (12) dans une seconde direction de transport (16) opposée,
un chariot de renvoi (18) étant prévu, lequel est agencé pour transférer les articles en forme de tiges depuis la première spirale (10) sur la seconde spirale (12), et
le chariot de renvoi (18) étant en outre déplaçable le long des spirales (10, 12) pour faire varier une longueur de la section de transport entre la zone de réception (4) et la zone de délivrance (6),
**caractérisé en ce que** la voie de guidage (8) comprend un dispositif de guidage et de retenue de chariot (56) sur lequel le chariot de renvoi (18) est maintenu de manière déplaçable sur la voie de guidage (8).

2. Dispositif (2) selon la revendication 1, **caractérisé en ce que** le chariot de renvoi (18) comprend une structure porteuse qui coopère avec le dispositif de guidage et de retenue de chariot (56) de la voie de guidage (8) et qui est en outre conçue pour maintenir le chariot de renvoi (18) de manière déplaçable sur la voie de guidage (8).

3. Dispositif (2) selon la revendication 1 ou 2, **caractérisé en ce que** le chariot de renvoi (18) comprend un premier et un second dispositifs déflecteurs (28), le premier dispositif déflecteur (28) étant agencé pour évacuer latéralement de la première spirale (10) les articles en forme de tiges transversalement à la première direction de transport (14) et le second dispositif déflecteur (30) étant agencé pour insérer latéralement dans la seconde spirale (12) un flux massique dévié transversalement à la seconde direction de transport (16).

4. Dispositif (2) selon l'une des revendications 1 à 3, **caractérisé en ce que** le chariot de renvoi (18) comprend un entraînement qui lui est propre et permet de déplacer le chariot de renvoi (18) sur la voie de guidage (8).

5. Dispositif (2) selon la revendication 4, **caractérisé en ce qu'**est prévu sur la voie de guidage (8) un élément de prise, statique par rapport à la voie de guidage (8), dans lequel s'engage par complémentarité de forme un élément d'entraînement de la commande du chariot de renvoi (18) pour générer une force s'exerçant entre la voie de guidage (8) et le chariot de renvoi (18).

6. Dispositif (2) selon l'une des revendications 1 à 5, **caractérisé en ce que** la voie de guidage (8) est constituée de modules individuels qui s'étendent, en particulier au moins sensiblement, le long d'une demi-spire de la spirale (10, 12).

7. Utilisation d'un dispositif (2) selon l'une des revendications 1 à 6 en tant qu'accumulateur de masse variable d'articles en forme de tiges dans une installation de l'industrie de transformation du tabac.
